## Europäisches Patentamt
## European Patent Office
## Office européen des brevets

(19)

(11) Veröffentlichungsnummer: **0 066 636**
A1

## (12) EUROPÄISCHE PATENTANMELDUNG

(21) Anmeldenummer: 81104376.9

(22) Anmeldetag: 05.06.81

(51) Int. Cl.³: **G 01 D 5/36**, G 01 P 3/486

(43) Veröffentlichungstag der Anmeldung: **15.12.82**
**Patentblatt 82/50**

(71) Anmelder: **SIEMENS AKTIENGESELLSCHAFT Berlin und München, Postfach 22 02 61, D-8000 München 22 (DE)**

(84) Benannte Vertragsstaaten: **DE**

(72) Erfinder: **Gilly, Joachim, Ing. grad., Riemenschneiderstrasse 28, D-8702 Estenfeld (DE)**

(54) **Optischer Impulsgeber, insbesondere Drehwinkelgeber.**

(57) Als Spurscheibe, deren Blendenraster bei einer Drehwinkeländerung einer Motorwelle (7) den Lichtstrahl zwischen einem Lichtsender (7) und einem Lichtempfänger (8) unterbricht, wird eine Filmplatte (3) mit einer dem Blendenraster (31) entsprechenden Belichtung (Positiv oder Negativ) auf der Motorwelle (6) befestigt. Zur einfachen und genau justierbaren Befestigung dient eine mit der Filmplatte (3) verbundene Nabe in Form einer Spannzange.

Eine Anwendung eignet sich insbesondere für preiswerte und kompakte Geber sowie bei hohen Anlaufgeschwindigkeiten der Spurscheibe.

0066636

SIEMENS AKTIENGESELLSCHAFT          Unser Zeichen
Berlin und München                  VPA 81 P 3 0 9 1 E

Optischer Impulsgeber, insbesondere Drehwinkelgeber

Die Erfindung bezieht sich auf einen optischen Impulsgeber, insbesondere Drehwinkelgeber, gemäß Oberbegriff des Patentanspruchs 1; ein derartiger Impulsgeber ist z.B. aus der Zeitschrift "Feinwerktechnik und Meßtechnik" 84 (1976) 4, S. 175 bis 177 bekannt.

Im bekannten Fall ist als zwischen Lichtsender und Lichtempfänger vorgesehener Blendenraster ein Zackenzylinder auf dem einen Wellenende eines hochtourigen elektrischen Kleinmotors angeordnet, dessen Drehzahl und Drehrichtung erfaßt werden soll. Anstelle eines Zackenzylinders können auch Sektorenblenden oder Kodierscheiben zur Ableitung einer der Drehzahl- oder Drehwinkeländerung entsprechenden Impulsfolge vorgesehen werden.

Es ist bekannt, zur Herstellung von sogenannten Spurscheiben zur optischen Abtastung Glasscheiben mit einem aus aufeinanderfolgenden Strichmarkierungen gebildeten Blendenraster oder Metallscheiben mit einem aus aufeinanderfolgenden Fenstern gebildeten Blendenraster zu verwenden. Zur Herstellung dieser Blendenraster werden Filme als Vorlagen verwendet, deren Blendenraster auf die Glasscheiben kopiert oder aus den Metallscheiben herausgearbeitet, z.B. herausgeätzt werden.

Aufgabe der vorliegenden Erfindung ist es, einen optischen Impulsgeber der eingangs genannten Art zu schaffen, der bei einfachster Fertigung extreme Anbautoleranzen und einen großen Wellenschlag aufzufangen und eine

Bk 2 Bim / 29.05.1981

genaue Drehwinkel- bzw. Drehzahlerfassung auch bei hohen Geschwindigkeiten, insbesondere hohen Anlaufgeschwindigkeiten ermöglicht.

Die Lösung dieser Aufgabe wird bei einem optischen Impulsgeber der eingangs genannten Art durch die kennzeichnende Lehre des Patentanspruchs 1 erreicht. Die Gegenstände der Unteransprüche betreffen zweckmäßige Ausgestaltungen dieser Erfindung.

Durch die erfindungsgemäß vorgesehene Verwendung der Filmplatte selbst als Spurscheibe können mit geringem Aufwand durch mehrfaches Kopieren einer einzigen Ursprungs-Filmplatte eine Vielzahl von Spurscheiben bei hoher Maßhaltigkeit hergestellt werden. Beim Kopieren können die Filmplatten entweder als Positiv oder als Negativ gefertigt werden und somit mit geringem Aufwand bei einer Vielzahl praktischer Anwendungsfälle sowohl die bisher nach Filmplatten-Vorlagen gefertigten üblichen Glas-Spurscheiben als auch die bekannten Metall-Spurscheiben voll ersetzen. Die hohe Flexibilität der Filmplatte ermöglich den Bau eines optischen Gebers, der in der Lage ist, extreme Anbautoleranzen und große Wellenschläge aufzufangen, wobei die aus der Filmplatte gebildete Spurscheibe aufgrund ihrer erheblichen Verformbarkeit auch bei hohen Anlaufgeschwindigkeiten eine große Betriebssicherheit gewährleisten kann. Bisher konnten derartigen extremen Betriebsbedingungen nur Geber mit extrem dünnen Metallscheiben und auch dann nur in eingeschränktem Maße ausgesetzt werden.

Die erfindungsgemäße aus der Filmplatte selbst gebildeten Spurscheiben ermöglichen einen Blendenraster mit sehr hoher Impulsfolge und sehr genauer Impulstrennung selbst bei kompaktester Bauweise. Der Einsatz

0066636

derartiger Spurscheiben mit genauer und dichter Impulsfolge des Blendenrasters kann in vorteilhafter Weise dadurch weiter unterstützt werden, wenn nach einer Ausgestaltung der Erfindung die Filmplatte auf der Motorwelle mittels einer mit der Filmplatte bzw. der Filmplattenhalterung verbundenen Nabe befestigt wird, die in Form einer Spannzangenbefestigung eine genaue Justierung der Spurscheibe, insbesondere hinsichtlich der Festlegung des Nullindex, ermöglicht.

Die Erfindung sowie weitere vorteilhafte Ausgestaltungen der Erfindung werden im folgenden anhand eines schematisch dargestellten Ausführungsbeispiels in der Zeichnung näher erläutert.

Fig. 1 in einem Längsschnittbild einen an einem Wellenende eines elektrischen Kleinmotors angetriebenen Winkelschrittgeber,
Fig. 2 eine axiale Draufsicht auf die Nabenbefestigung der Spurscheibe des Winkelschrittgebers gemäß Fig. 1,
Fig. 3 eine axiale Teildraufsicht auf die Spurscheibe des Winkelschrittgebers gemäß Fig. 1.

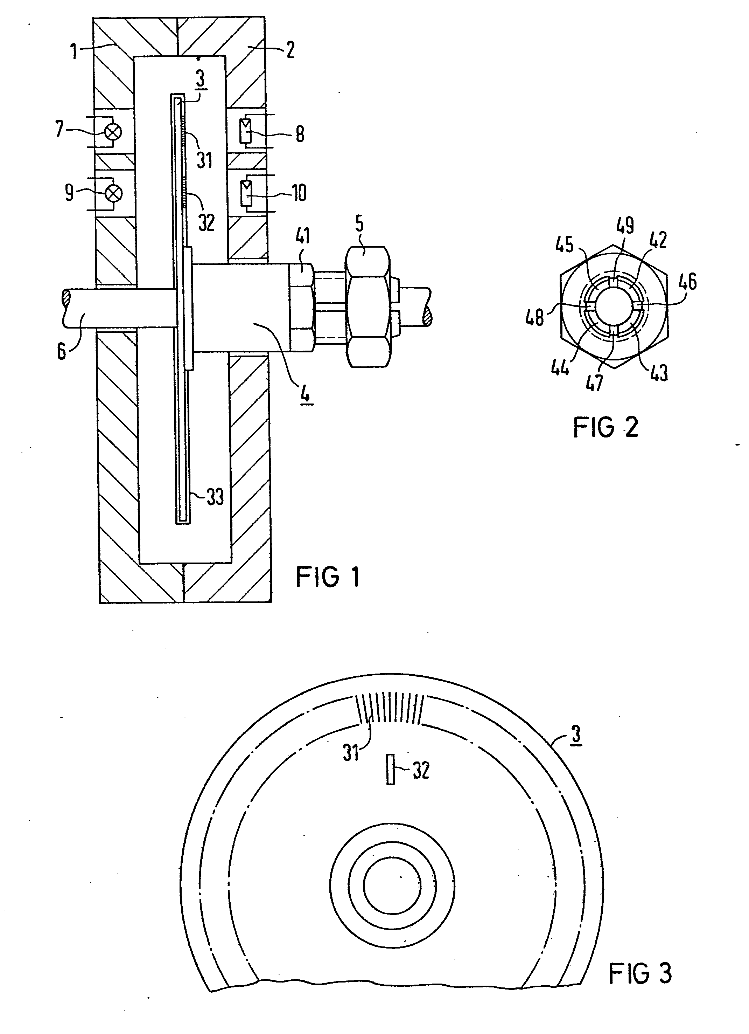

Gemäß Fig. 1 ist auf dem rechten Ende einer Motorwelle 6 über eine Nabe 4 eine Filmplatte 3 mit einem in Fig. 3 näher dargestellten Blendenraster 31 und einer Nullindexmarkierung 32 befestigt. Die Filmplatte 3 wird von zwei Gehäusehälften 1, 2 umschlossen, deren linke Gehäusehälfte 1 einen dem Blendenraster 31 zugeordneten Lichtsender 7 und einen die Nullindexmarkierung 32 zugeordneten Lichtsender 9 und deren rechte Gehäusehälfte entsprechende Lichtempfänger 8, 10 aufnimmt.

Zum äußeren Schutz der Filmplatte 3, insbesondere gegenüber Kratzspuren, ist vorteilhafterweise vorgesehen, daß die Filmplatte 3 ein- oder beidseitig mit einer transparenten flexiblen Kunststoffolie versiegelt ist oder daß die Filmplatte 3 in einem dünnschichtigen transparenten Kunststoffmantel 33 mit einer gleich der Filmplatte 3 hohen Flexibilität eingegossen ist.

Die Steifigkeit der Filmplatte 3 selbst reicht oft für eine hinreichende betriebsmäßige Formstabilität aus. Liegt jedoch das Filmplattenmaterial nur in extrem dünner Schichtdicke an oder soll zur Einsparung von Filmmaterial nur jeweils der Blendenrasterstreifen bzw. die Nullindexmarkierung kopiert werden, so kann in vorteilhafter Weise die gesamte Filmplatte bzw. der den Blendenraster und/oder den Nullindex aufnehmende Filmstreifen an einer Trägerscheibe befestigt werden; diese Trägerscheibe besteht, insbesondere dann, wenn das Filmmaterial auf dieser aufliegt, aus einer transparenten Scheibe.

Zur Erzielung einer möglichst hohen Genauigkeit beim Auslesen der Information ist zweckmäßigerweise zur Vermeidung störender Streulichteinflüsse die den Blendenraster 31 und/oder die Nullindexmarkierung 32 bildende Filmschicht auf der dem jeweiligen Lichtempfänger 8 bzw. 10 zugewandten Seite der Filmplatte 3 angeordnet.

Nach einer Ausgestaltung der Erfindung ist weiterhin vorgesehen, daß die Nabe 4 einstückig an den Kunststoffmantel 33 bzw. an die Filmplatte 3 einstückig mitangeformt ist. Die Motorwelle 6 ragt mit ihrem rechten Ende in eine Wellenbohrung der Nabe 4 und ist mit dieser kraftschlüssig verbunden. In vorteilhafter Weise ist die Nabe 4 in Form einer auf der Motorwelle 6 aufklemmbare Spannzange ausgebildet; dazu weist die

0066636

Nabe 4 vier durch axial stirnseitige Schlitzöffnungen 46 - 49 gebildete Spannbacken 42 - 45 auf, die nach Einstellung der richtigen Justagelage der Filmplatte 3 durch Festziehen einer Überwurfmutter 5 auf der Motorwelle 6 eindeutig fixierbar ist. Als Festellhilfe dient gleichzeitig eine auf dem mit der Spurscheibe fest verbundenen Nabenteil außerhalb des Gehäuses 1, 2 vorgesehene Profilierung in Form eines feststehenden Sechskantes 41, der beim Anziehen der Mutter 5 ein ungewolltes Verstellen der zuvor in die Justagelage gebrachten Nabe 4 mit Sicherheit verhindert.

3 Figuren
8 Patentansprüche

Patentansprüche

1. Optischer Impulsgeber, insbesondere Drehwinkelgeber, mit einem einen Lichtstrahl zwischen einem Lichtsender und einem Lichtempfänger bei einer Drehwinkeländerung unterbrechenden Blendenraster, insbesondere mit einem Blendenraster versehene und zwischen Lichtsender und Lichtempfänger auf einer Motorwelle befestigte Spurscheibe, deren Blendenraster mit Hilfe einer entsprechend markierten Filmplatte gebildet ist, d a - d u r c h   g e k e n n z e i c h n e t , daß die mit dem Blendenraster (31, 32) versehene Filmplatte (3) selbst als Spurscheibe vorgesehen ist.

2. Optischer Impulsgeber nach Anspruch 1, d a - d u r c h   g e k e n n z e i c h n e t , daß die Filmplatte (3) an einer Trägerscheibe befestigt ist, die mit einer hinsichtlich ihrer Drehwinkeländerung zu überwachenden Motorwelle (6) gekoppelt ist.

3. Optischer Impulsgeber nach Anspruch 2, d a - d u r c h   g e k e n n z e i c h n e t , daß die Filmplatte (3) auf einer mit der Motorwelle (6) gekoppelten transparenten Scheibe angeordnet ist.

4. Optischer Impulsgeber nach einem der Ansprüche 1 bis 3, d a d u r c h   g e k e n n z e i c h n e t , daß die Filmplatte (3) ein- oder beidseitig mit einer transparenten flexiblen Kunststoffolie versiegelt ist.

5. Optischer Impulsgeber nach Anspruch 1 oder 2, d a - d u r c h   g e k e n n z e i c h n e t , daß die Filmplatte (3) in einem dünnschichtigen transparenten Kunststoffmantel (33) einer gleich der Filmplatte (3) hohen Flexibilität eingegossen ist.

6. Optischer Impulsgeber nach einem der Ansprüche 1 bis 5, d a d u r c h  g e k e n n z e i c h n e t , daß die den Blendenraster (31) bildende Filmschicht auf der dem Lichtempfänger (8) zugewandten Seite der Filmplatte (3) angeordnet ist.

7. Optischer Impulsgeber nach einem der Ansprüche 1 bis 6, d a d u r c h  g e k e n n z e i c h n e t , daß an die Filmplatte (3) bzw. an die eine Filmplatte aufnehmende Trägerscheibe eine Nabe (4) mit einer zur Motorwelle (6) konzentrischen Wellenbohrung angeformt ist.

8. Optischer Impulsgeber nach Anspruch 7, d a - d u r c h  g e k e n n z e i c h n e t , daß die zur Befestigung der Filmplatte (3) bzw. der Trägerscheibe auf der Motorwelle (6) vorgesehene Nabe (4) in Form einer auf der Motorwelle (6) aufklemmbaren Spannzange (Spannbacken 42 - 45) ausgebildet ist.

FIG 1

FIG 2

FIG 3

Europäisches
Patentamt

**EUROPÄISCHER RECHERCHENBERICHT**

0066636
Nummer der Anmeldung

EP 81 10 4376

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| X | US - A - 3 008 372 (WILLEY et al.) * Spalte 1, Zeilen 40-61; Figuren 1 und 2 * --- | 1 |
| A | DE - A - 1 447 228 (LICENTIA) * Seite 3, Zeilen 1-7; Seite 4, Zeilen 1-3; Figuren 1 und 2 * --- | 1,6,8 |
| A | US - A - 3 400 275 (TRUMP) * Spalte 3, Zeilen 37-56; Figur 1 * --- | 1,2,7 |
| D/A | FEINWERKTECHNIK & MESSTECHNIK, Band 84, Heft 4, 1976, MÜNCHEN (DE) I. BROCKMÜLLER: "Aufbau und Einsatz von optischen Impulsgebern für Drehzahlregelungen", Seiten 175-177 ------------ | 1 |

**KLASSIFIKATION DER ANMELDUNG (Int. Cl.)**

G 01 D 5/36
G 01 P 3/486

**RECHERCHIERTE SACHGEBIETE (Int. Cl.)**

G 01 P 3/486
G 01 D 5/34
G 01 D 5/36
H 03 K

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26.02.1982 | HANSEN |

EPA form 1503.1  06.78